(19) Europäisches Patentamt

European Patent Office

Office européen des brevets

(11) **EP 3 809 501 A1**

(12) # EUROPEAN PATENT APPLICATION
published in accordance with Art. 153(4) EPC

(43) Date of publication:
**21.04.2021 Bulletin 2021/16**

(21) Application number: **19820114.7**

(22) Date of filing: **30.05.2019**

(51) Int Cl.:
***H01M 4/66*** *(2006.01)*

(86) International application number:
**PCT/JP2019/021614**

(87) International publication number:
**WO 2019/239916 (19.12.2019 Gazette 2019/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.06.2018 JP 2018112869**

(71) Applicant: **NISSAN MOTOR CO., LTD.**
**Yokohama-shi, Kanagawa 221-0023 (JP)**

(72) Inventors:
• **IKEDA, Yoshihiro**
 **Kyoto-shi, Kyoto 605-0995 (JP)**
• **KUSANO, Ryosuke**
 **Kyoto-shi, Kyoto 605-0995 (JP)**

• **TSUDO, Yasuhiro**
 **Kyoto-shi, Kyoto 605-0995 (JP)**
• **OSAWA, Yasuhiko**
 **Atsugi-shi, Kanagawa 243-0123 (JP)**
• **KUSACHI, Yuki**
 **Atsugi-shi, Kanagawa 243-0123 (JP)**
• **SATO, Hajime**
 **Atsugi-shi, Kanagawa 243-0123 (JP)**
• **AKAMA, Hiroshi**
 **Atsugi-shi, Kanagawa 243-0123 (JP)**
• **HORIE, Hideaki**
 **Atsugi-shi, Kanagawa 243-0123 (JP)**

(74) Representative: **Grünecker Patent- und Rechtsanwälte**
**PartG mbB**
**Leopoldstraße 4**
**80802 München (DE)**

(54) **RESIN CURRENT COLLECTOR AND LAMINATED TYPE RESIN CURRENT COLLECTOR, AND LITHIUM ION BATTERY COMPRISING THIS**

(57) To provide a resin current collector which exhibits liquid bleeding prevention property and low resistance, can suppress the generation of an oxidation current, and exhibits moldability that enables film thinning.

A resin current collector containing a polyolefin resin and two kinds of conductive carbon fillers, a first conductive carbon filler (A1) and a second conductive carbon filler (A2), in which the first conductive carbon filler (A1) is graphite or carbon black, the second conductive carbon filler (A2) is a carbon nanotube or a carbon nanofiber having a specific surface area of 35 to 300 $m^2/g$, a total surface area of the first conductive carbon filler (A1) contained in 1 g of the resin current collector is 0.5 to 9.0 $m^2$, and a mass proportion of the first conductive carbon filler (A1) is 30% by mass or less with respect to a mass of the resin current collector.

**EP 3 809 501 A1**

**Description**

**TECHNICAL FIELD**

The present invention relates to a resin current collector and a laminate type resin current collector, and a lithium ion battery including the same.

**BACKGROUND ART**

In recent years, reduction of carbon dioxide emissions has been ardently desired for environmental protection. In the motor vehicle industry, expectations are growing for the reduction of carbon dioxide emissions by the introduction of electric vehicles (EV) and hybrid electric vehicles (HEV), and secondary batteries for motor driving which hold the key to the practical use of these have been earnestly developed. As the secondary batteries, attention is focused on lithium ion batteries which can achieve a high energy density and a high output density.

In lithium ion batteries, generally electrodes are respectively formed by coating a current collector for positive electrode or a current collector for negative electrode with a positive electrode active material and the like or a negative electrode active material and the like using a binder. In addition, in the case of a bipolar (bipolar type) battery, a bipolar (bipolar type) electrode including a positive electrode layer and a negative electrode layer is formed by coating one surface of a current collector with a positive electrode active material and the like using a binder and coating the surface on the opposite side with a negative electrode active material and the like using a binder.

In such lithium ion batteries, a metal foil (metal current collector foil) has been conventionally used as a current collector. In recent years, so-called resin current collectors formed of resins to which conductive materials are added have been proposed instead of metal foils. Such resin current collectors are lighter in weight than metal current collector foils and are expected to improve the output per unit weight of the battery.

Patent Literature 1 discloses a material for resin current collector containing a dispersant for resin current collector, a resin, and a conductive filler and a resin current collector containing the material for resin current collector.

Citation List

Patent Literatures

Patent Literature 1: WO 2015/005116 A

**SUMMARY OF INVENTION**

Technical Problem

Patent Literature 1 describes an example in which a polypropylene resin is used as a resin and acetylene black is used as a conductive filler as an example of a resin current collector. However, in a case in which such a resin current collector is used as a resin current collector for positive electrode, it has been revealed that the oxidative decomposition current (oxidation current) flows and the cycle characteristics cannot be sufficiently maintained after a predetermined number of repetitions when a cycle test is performed by applying a predetermined voltage for a certain period of time.

Furthermore, a resin current collector containing a large amount of a conductive filler having a large specific surface area such as acetylene black can lower the electric resistance, but an electrolyte solution is likely to bleed into the resin current collector and this may cause a phenomenon of "liquid bleeding" that the electrolyte solution bleeds on the surface of the resin current collector when the charge and discharge test is repeated.

In addition, when a conductive filler such as graphite having a large particle size is highly filled and used as a conductive filler in order to lower the resistance value of the resin current collector, there is a problem in moldability by a sheet molding machine and a problem that film thinning is difficult.

In view of the above circumstances, an object of the present invention is to provide a resin current collector which exhibits liquid bleeding prevention property and low resistance, can suppress the generation of an oxidation current, and exhibits moldability that enables film thinning. Another object of the present invention is to provide a lithium ion battery fabricated using the resin current collector.

Solution to Problem

The inventors of the present invention have carried out earnest investigations in order to solve the above problems and, as a result, conceived the present invention.

In other words, the present invention is a resin current collector containing a polyolefin resin and two kinds of conductive carbon fillers, a first conductive carbon filler (A1) and a second conductive carbon filler (A2), in which the first conductive carbon filler (A1) is graphite or carbon black, the second conductive carbon filler (A2) is a carbon nanotube or a carbon nanofiber having a specific surface area of 35 to 300 $m^2/g$, a total surface area of the first conductive carbon filler (A1) contained in 1 g of the resin current collector is 0.5 to 9.0 $m^2$, and a mass proportion of the first conductive carbon filler (A1) is 30% by mass or less with respect to a mass of the resin current collector; a laminate type resin current collector including two or more conductive resin layers, in which at least one layer among the conductive resin layers is the resin current collector of the present invention; and a lithium ion battery including the resin current collector of the present invention or the laminate type resin current collector of the present invention.

**DESCRIPTION OF EMBODIMENTS**

The resin current collector of the present invention is a resin current collector containing a polyolefin resin and two kinds of conductive carbon fillers, a first conductive carbon filler (A1) and a second conductive carbon filler (A2), in which the first conductive carbon filler (A1) is graphite or carbon black, the second conductive carbon filler (A2) is a carbon nanotube or a carbon nanofiber having a specific surface area of 35 to 300 $m^2/g$, a total surface area of the first conductive carbon filler (A1) contained in 1 g of the resin current collector is 0.5 to 9.0 $m^2$, and a mass proportion of the first conductive carbon filler (A1) is 30% by mass or less with respect to a mass of the resin current collector.

The resin current collector of the present invention exhibits liquid bleeding prevention property and low resistance, can suppress the generation of an oxidation current, and exhibits moldability that enables film thinning.

By setting the blended amount of the first conductive carbon filler (A1) which affects the moldability by a sheet molding machine to 30% by mass or less with respect to the mass of the resin current collector, the resin current collector exhibits moldability that enables film thinning and can be formed into a resin current collector having sufficient strength even in a case in which the current collector is deformed by internal stress and the like.

In addition, by concurrently using the second conductive carbon filler (A2), it is possible to lower the resistance value of the resin current collector with a smaller amount of conductive filler and to suppress the generation of an oxidation current and the liquid bleeding as compared with a case in which only graphite or carbon black that is the first conductive carbon filler (A1) is used as the conductive filler, and thus a resin current collector exhibiting excellent cycle characteristics can be obtained.

The resin current collector of the present invention is preferably formed using a conductive resin composition containing a polyolefin resin and two kinds of conductive carbon fillers, the first conductive carbon filler (A1) and the second conductive carbon filler (A2).

Preferable examples of the polyolefin resin used in the resin current collector of the present invention include polyolefins [polyethylene (PE), polypropylene (PP), polymethylpentene (PMP), polycycloolefin (PCO), and the like] . More preferable polyolefin resins are polyethylene (PE), polypropylene (PP), and polymethylpentene (PMP). In addition, the polyolefin resin may be any modified product (hereinafter referred to as modified polyolefin) or mixture of these polyolefin resins.

As the polyolefin resin, for example, the following are available from the market:

PE: "NOVATEC LL UE320" and "NOVATEC LL UJ960" both manufactured by Japan Polyethylene Corporation
PP: "SunAllomer PM854X" "SunAllomer PC684S" "SunAllomer PL500A" "SunAllomer PC630S" "SunAllomer PC630A" "SunAllomer PB522M" and "Qualear CM688A" all manufactured by SunAllomer Ltd., "Prime Polymer J-2000GP" manufactured by Prime Polymer Co., Ltd., and "WINTEC WFX4T" manufactured by Japan Polypropylene Corporation
PMP: "TPX" manufactured by Mitsui Chemicals, Inc.

Examples of the modified polyolefin include those obtained by introducing polar functional groups into polyethylene, polypropylene, or copolymers of these, and examples of the polar functional group include a carboxyl group, a 1,3-dioxo-2-oxapropylene group, a hydroxyl group, an amino group, an amide group, an imide group and the like.

As examples of the modified polyolefins obtained by introducing polar functional groups into polyethylene, polypropylene, or copolymers of these, ADMER series manufactured by Mitsui Chemicals, Inc. are commercially available.

The resin current collector of the present invention contains two kinds of conductive carbon fillers. Preferably, the resin current collector is formed using a conductive resin composition containing the above-mentioned two kinds of conductive carbon fillers. The conductive carbon filler includes the first conductive carbon filler (A1) and the second conductive carbon filler (A2) .

Hereinafter, the first conductive carbon filler (A1) and the second conductive carbon filler (A2) will be described.

The first conductive carbon filler (A1) is graphite or carbon black. Examples of carbon black include furnace black, acetylene black, Ketjen black (registered trademark), channel black, thermal lamp black, and the like. From the viewpoint of the balance among moldability, conductivity, and the amount of oxidation current flowing through the current collector, the specific surface area of the first conductive carbon filler (A1) is preferably 1 to 70 $m^2/g$, more preferably 5 to 70 $m^2/g$, and still more preferably 10 to 33 $m^2/g$.

In the present specification, the specific surface area of the conductive carbon filler is a value measured as a BET specific surface area in conformity with "JIS Z8830: 2013 Method for measuring specific surface area of powder (solid) by gas adsorption".

Among the first conductive carbon fillers (A1), preferable carbon black includes furnace blacks having a specific surface area of 1 to 35 $m^2/g$, mixtures of these, and the like, but the first conductive carbon filler (A1) is not limited to these.

From the viewpoint of the balance among moldability, conductivity, and the amount of oxidation current flowing through the current collector, as furnace black, those having an average primary particle size of 45 to 65 nm are more preferable and those that form an aggregate and have an average secondary particle size of 0.5 to 2 μm are particularly preferable. Those available from the market as the furnace black include "SEAST TA (19 $m^2/g$)" trade name manufactured by Tokai Carbon Co., Ltd. "#3030 (32 $m^2/g$)" trade name manufactured by Mitsubishi Chemical Corporation, and the like. Incidentally, the value in parentheses after the product name is the specific surface area of the conductive carbon filler.

In addition to furnace black, those available from the market as the first conductive carbon filler (A1) include "SNG-P1A1 (0.6 $m^2/g$)" trade name [manufactured by JFE Chemical Corporation], "UP20N (3.33 $m^2/g$)" "CGB20 (4.72 $m^2/g$)" "CPB (6.95 $m^2/g$)" trade names [manufactured by Nippon Graphite Industries Co., Ltd.], "SG-BH (4.84 $m^2/g$)" "SG-BL30 (4.28 $m^2/g$)" "SG-BL40 (3.19 $m^2/g$)" "RP99-150 (5.13 $m^2/g$)" "PC99-300M (3.87 $m^2/g$)" "SRP-150 (5.61 $m^2/g$)" "PC-30 (6.04 $m^2/g$)" trade names [all manufactured by Ito Graphite Co., Ltd.], "SNG-WXA1 (1.8 $m^2/g$)" trade name [manufactured by JFE Chemical Corporation], and the like as graphite.

Those available from the market as the first conductive carbon filler (A1) include "DENKA BLACK (69 $m^2/g$)" "DENKA BLACK Li-400 (39 $m^2/g$)" trade names [manufactured by Denka Company Limited], "ENSACO 250G granular (68 $m^2/g$)" trade name [manufactured by IMERYS], and the like as acetylene black.

Incidentally, the value in parentheses after the product name is the specific surface area of the conductive carbon filler.

In the present specification, the average particle size of the conductive carbon filler means the average particle size of 10 arbitrary particles observed under a scanning electron microscope (SEM). As SEM, for example, a scanning electron microscope (SEM) manufactured by Hitachi High-Tech Corporation can be used.

As the first conductive carbon filler (A1), two or more different kinds of conductive carbon fillers having different specific surface areas or average particle sizes may be contained.

The mass proportion of the first conductive carbon filler (A1) contained in the resin current collector is 30% by mass or less with respect to the mass of the resin current collector. By setting the weight proportion of the first conductive carbon filler (A1) to 30% by mass or less, it is possible to obtain a resin current collector exhibiting moldability that enables film thinning by a sheet molding machine. In the case of concurrently using plural kinds of first conductive carbon fillers (A1), the mass proportion of the first conductive carbon filler (A1) is determined as the total amount of the first conductive carbon fillers (A1) contained in the resin current collector.

The total surface area of the first conductive carbon fillers (A1) contained in 1 g of the resin current collector is 0.5 to 9.0 $m^2$. When the total surface area is less than 0.5 $m^2$, it is difficult to achieve both suppression of oxidation current and suppression of penetration resistance. When the total surface area exceeds 9.0 $m^2$, liquid bleeding is likely to occur and an oxidation current is likely to be generated. In the present specification, the total surface area of the conductive carbon fillers contained in 1 g of the resin current collector is calculated by the following equation.

```
Total surface area of conductive carbon filler contained in 1 g of resin

current collector (m²) = mass of conductive carbon filler in 1 g of resin current

collector (g) × specific surface area of conductive carbon filler (m²/g)
```

In the case of concurrently using plural kinds of first conductive carbon fillers (A1), the above value can be determined as the sum of the products of the masses (g) of the respective conductive carbon fillers in 1 g of the resin current collector and the specific surface areas ($m^2/g$) of the conductive carbon fillers.

As the second conductive carbon filler (A2), carbon nanotubes or carbon nanofibers having a specific surface area of 35 to 300 $m^2/g$ are used. When the specific surface area of the second conductive carbon filler (A2) is less than 35 $m^2/g$, the penetration resistance increases. On the other hand, when the specific surface area exceeds 300 $m^2/g$, an oxidation current is likely to be generated. The specific surface area of carbon nanotubes or carbon nanofibers is a value measured as a BET specific surface area in conformity with "JIS Z8830: 2013 Method for measuring specific surface area of powder (solid) by gas adsorption".

Those available from the market as the carbon nanotubes include "1201YJE (58 $m^2$/g)" trade name manufactured by NANOSTRUCTURED & AMORPHOUS MATERIALS, Inc., "K-Nanos 100P (213 $m^2$/g)" trade name manufactured by KUMHO PETROCHEMICAL, "NC7000 (280 $m^2$/g)" trade name manufactured by Nanocyl SA., "Flotube 9000 (230 $m^2$/g)" trade name manufactured by CNano Technology, and the like. Incidentally, the value in parentheses after the product name is the specific surface area of the conductive carbon filler.

The second conductive carbon filler (A2) has an elongated shape, forms a conductive path by forming a network in the resin current collector, and thus exhibits relatively high conductivity in consideration of the specific surface area, and it is possible to lower the resistance value of the resin current collector by blending the second conductive carbon filler (A2). In addition, when the second conductive carbon filler (A2) having an elongated shape is used, it is considered that the amount of the filler exposed on the surface of the resin current collector is suppressed due to the crystal orientation at the time of molding of the resin current collector, and thus it is expected that the filler less adversely affects liquid bleeding. As the second conductive carbon filler (A2), the effect of carbon nanotubes has been confirmed and it is considered that carbon nanofibers having an elongated shape can also be used in the same manner.

The carbon nanotubes or carbon nanofibers as the second conductive carbon filler (A2) may be used singly or plural kinds thereof may be used concurrently.

The mass proportion of the second conductive carbon filler (A2) contained in the resin current collector is preferably 5 to 20% by mass with respect to the weight of the resin current collector. In the case of concurrently using plural kinds of carbon nanotubes or carbon nanofibers as the second conductive carbon filler (A2), the mass proportion of the second conductive carbon filler (A2) is determined as the total amount of the second conductive carbon fillers (A2) contained in the resin current collector.

The second conductive carbon filler (A2) forms a conductive path by forming a network in the resin current collector and thus exhibits relatively high conductivity in consideration of the specific surface area. Hence, it is possible to lower the resistance value of the resin current collector by blending the second conductive carbon filler (A2). In addition, by using the second conductive carbon filler (A2), it is possible to suppress the generation of an oxidation current and the liquid bleeding as compared with a case in which only graphite or carbon black that is the first conductive carbon filler (A1) is used as the conductive carbon filler, and thus a resin current collector exhibiting excellent cycle characteristics can be obtained.

The resin current collector may contain a conductive material different from the conductive carbon filler. Examples of the material for the conductive material include metals [nickel, aluminum, stainless steel (SUS), silver, copper, titanium, and the like], alloys of these, and mixtures of these. From the viewpoint of electrical stability, nickel is preferable. In addition, the conductive material may be those obtained by coating the circumference of particle-based ceramic materials and resin materials with conductive materials (metals among the above-mentioned conductive materials) by plating and the like .

In addition to the polyolefin resin and the two kinds of conductive carbon fillers, the resin current collector may further appropriately contain other components [dispersants for conductive materials, colorants, ultraviolet absorbers, general-purpose plasticizers (phthalic acid skeleton-containing compounds, trimellitic acid skeleton-containing compounds, phosphoric acid group-containing compounds, epoxy skeleton-containing compounds, and the like)], and the like if necessary. From the viewpoint of electrical stability, the total amount of the other components added is preferably 0.001 to 5 parts by mass and still more preferably 0.001 to 3 parts by mass in 100 parts by mass of the resin current collector.

As the dispersants for conductive materials, UMEX series manufactured by SANYO CHEMICAL INDUSTRIES, LTD., HARDLEN series and TOYO-TAC series manufactured by TOYOBO CO., LTD., and the like can be used.

In addition, the proportion of the polyolefin resin contained in the resin current collector is preferably 60 to 80% by mass. When the proportion of the polyolefin resin is in the above range, the moldability is favorable and is suitable for thinning of the resin current collector.

In the resin current collector of the present invention, the thickness (film thickness) of the resin current collector is preferably 100 $\mu$m or less and more preferably 40 to 70 $\mu$m. When the thickness of the resin current collector is 100 $\mu$m or less, particularly 40 to 70 $\mu$m, it can be said that the thickness as a resin current collector is thin and the resin current collector is a thinned resin current collector. Such a resin current collector has a small volume in the battery and is thus suitable in order to increase the battery capacity of the battery. In addition, it is preferable that the thickness of the resin current collector is 40 to 70 $\mu$m since the strength of the resin current collector is sufficient.

In addition, in the resin current collector of the present invention, the electric resistance value in the main surface direction of the resin current collector is preferably 3500 $\Omega \cdot cm^2$ or less and the electric resistance value (penetration resistance value) in the thickness direction of the resin current collector is preferably 1 to 150 $\Omega \cdot cm^2$. The upper limit of the electric resistance value (penetration resistance value) in the thickness direction of the resin current collector is more preferably 30 $\Omega \cdot cm^2$ or less. The electric resistance value in the main surface direction of the resin current collector and the electric resistance value in the thickness direction of the resin current collector can be measured by the following methods.

<Measurement of electric resistance value in main surface direction of resin current collector>

The resistance value on the surface of the resin current collector measured using a resin current collector cut into a strip shape of 3 cm × 10 cm as a measurement sample and a low-resistivity meter [MCP-T610 manufactured by Nittoseiko Analytech Co., Ltd.] by a four probe method conforming to JIS K7194: 1994 is taken as the electric resistance value in the main surface direction of the resin current collector.

<Measurement of electric resistance value in thickness direction of resin current collector>

A resin current collector cut to $\phi$15 mm is used as a test piece for measurement, the test piece is sandwiched between the electrodes of an electric resistance measuring device [Model IMC-0240 manufactured by Imoto Machinery Co., Ltd.] to which a resistance meter [RM3548 manufactured by HIOKI E.E. CORPORATION] is connected, and the resistance value is measured while a load of 2.16 kg is applied to the electrodes. The value attained by multiplying the value in 60 seconds after the application of load is applied by the contact area between the electrode and the test piece can be taken as the electric resistance value in the thickness direction. Incidentally, the electric resistance measuring device [Model IMC-0240 manufactured by Imoto Machinery Co., Ltd.] is a device which conforms to the device used for measuring the volume electric resistance in the thickness direction in JIS K6378-5: 2016 and is for measuring the resistance value by sandwiching a test piece between positive and negative electrodes.

The resin current collector of the present invention can be preferably produced by the following method. First, a conductive resin composition is obtained by mixing the polyolefin resin, the first conductive carbon filler (A1), the second conductive carbon filler (A2), and, if necessary, other components.

As the mixing method, there are a method in which a master batch of conductive carbon fillers is obtained and then further mixed with the polyolefin resin, a method in which a master batch of the polyolefin resin, the conductive carbon fillers, and, if necessary, other components is used, a method in which all the raw materials are mixed together at once, and the like. For the mixing, a well-known mixer which is suitable for the pellet-like or powder-like components, for example, a kneader, an internal mixer, a Banbury mixer, a roll and the like can be used. Preferably, the polyolefin resin, the first conductive carbon filler (A1), the second conductive carbon filler (A2), and, if necessary, other components are melt-kneaded to obtain a conductive resin composition.

There is no particular limitation on the order of addition of the respective components at the time of mixing. The obtained mixture may be further pelletized or powdered by a pelletizer or the like.

The obtained conductive resin composition is molded into, for example, a film shape to obtain the resin current collector of the present invention. Examples of the method for molding the conductive resin composition into a film shape include known film-molding methods such as a T-die method, an inflation method, a calendering method and the like. For example, the resin current collector of the present invention can be fabricated by extruding the conductive resin composition using a T die and then rolling the extruded conductive resin composition. Incidentally, the resin current collector of the present invention can be obtained by a molding method other than film molding.

The resin current collector of the present invention is preferably used as a current collector of a lithium ion battery. The resin current collector of the present invention can also be used as a resin current collector for a positive electrode, and can also be used as a resin current collector for a negative electrode, but is preferably used as a resin current collector for a positive electrode of a lithium ion battery since the effect of the present invention is more remarkably attained.

The laminate type resin current collector of the present invention is a laminate type resin current collector including two or more conductive resin layers, in which at least one layer among the conductive resin layers is the resin current collector of the present invention. Preferably, at least one layer among the conductive resin layers is formed using the conductive resin composition described above. Preferably, the laminate type resin current collector of the present invention includes two or more conductive resin layers, and at least one layer among the conductive resin layers is the resin current collector of the present invention.

The resin current collector of the present invention becomes a conductive resin layer capable of preventing liquid bleeding, and thus liquid bleeding can be prevented for the laminate type resin current collector as a whole as at least one layer among the conductive resin layers constituting the laminate type resin current collector is the resin current collector of the present invention.

In the conductive resin layers constituting the laminate type resin current collector, all of the conductive resin layers may be the resin current collector of the present invention. At this time, all the conductive resin layers may be layers formed using the conductive resin composition described above. In addition, the conductive resin layers may include a layer other than the resin current collector of the present invention, and the layer other than the resin current collector of the present invention may be a layer formed using a composition other than the conductive resin composition described above.

The laminate type resin current collector of the present invention is obtained, for example, by preparing a conductive resin composition for being formed into each conductive resin layer and molding the conductive resin composition into a film shape. As a method for molding the conductive resin composition into a film shape, a known method can be used which can be used for production of a multilayer film having two or more layers. Specific examples thereof include a T-die method, an inflation method, an extrusion laminating method, and the like. For example, a laminate type resin current collector having two or more layers can be obtained by preparing two or more kinds of conductive resin compositions for being formed into the respective conductive resin layers and coextruding these conductive resin compositions using a T die.

In addition, the films fabricated using the conductive resin compositions for being formed into the respective conductive resin layers may be attached to each other by a method such as heat sealing (heating press) or the like. The conductive resin compositions for being formed into the respective conductive resin layers can be obtained by mixing the polyolefin resin, the first conductive carbon filler (A1), the second conductive carbon filler (A2), and, if necessary, other components.

The laminate type resin current collector of the present invention can also be preferably used as a resin current collector for a bipolar electrode of a lithium ion battery. A bipolar electrode is an electrode for lithium ion battery and means an electrode in which a positive electrode is formed on one surface of one current collector and a negative electrode is formed on the other surface thereof. It is preferable that at least one surface of the bipolar electrode having the positive electrode formed on one surface of the current collector and the negative electrode formed on the other surface thereof is the resin current collector of the present invention.

The lithium ion battery of the present invention is characterized by including the resin current collector of the present invention. In a case in which the lithium ion battery of the present invention includes the resin current collector of the present invention as a resin current collector for positive electrode, the lithium ion battery of the present invention includes the above-described resin current collector of the present invention and a positive electrode active material layer formed on the surface of the resin current collector. The positive electrode active material layer contains, if necessary, additives such as a binder, a conductive aid and the like together with the positive electrode active material.

In a case in which the lithium ion battery of the present invention includes the resin current collector of the present invention as a resin current collector for negative electrode, the lithium ion battery of the present invention includes the above-described resin current collector of the present invention and a negative electrode active material layer formed on the surface of the resin current collector. The negative electrode active material layer contains, if necessary, additives such as a binder, a conductive aid and the like together with the negative electrode active material.

The lithium ion battery of the present invention further includes an electrolyte solution and a separator. In the lithium ion battery of the present invention, known materials can be used as materials for the positive electrode active material, the negative electrode active material, the electrolyte solution, the separator and the like. The positive electrode active material and the negative electrode active material may be coated active materials coated with a resin such as an acrylic resin. In a case in which the current collector for positive electrode or the current collector for negative electrode is not the resin current collector of the present invention, these current collectors may be a metal current collector foil or a resin current collector.

In addition, the lithium ion battery of the present invention may include the laminate type resin current collector of the present invention. The laminate type resin current collector of the present invention may be used as a resin current collector for positive electrode or a resin current collector for negative electrode in the lithium ion battery. Other configurations can be the same as those of the lithium ion battery of the present invention described above.

Examples

Next, the present invention will be specifically described with reference to Examples, but the present invention is not limited to Examples as long as it does not deviate from the gist of the present invention. Incidentally, unless otherwise stated, parts mean parts by mass and percentage means percentage by mass.

The materials used in the following Examples are as follows:

First conductive carbon filler (A1)

A1-1: Graphite particles [specific surface area: 1.8 $m^2/g$, "SNG-WXA1" trade name manufactured by JFE Chemical Corporation]

Al-2: Furnace black [specific surface area: 32 $m^2/g$, "#3030" trade name manufactured by Mitsubishi Chemical Corporation]

A1-3: Acetylene black [specific surface area: 39 $m^2$/g, "DENKA BLACK Li-400" trade name manufactured by Denka Company Limited]
A1-4: Acetylene black [specific surface area: 69 $m^2$/g, "DENKA BLACK" trade name manufactured by Denka Company Limited]

Second conductive carbon filler (A2)

A2-1: Carbon nanotube [Specific surface area: 58 $m^2$/g, "1201YJE" trade name manufactured by NANOSTRUCTURED & AMORPHOUS MATERIALS, Inc.]
A2-2: Carbon nanotube [specific surface area: 213 $m^2$/g, "K-Nanos 100P" trade name manufactured by KUMHO PETROCHEMICAL]
A2-3: Carbon nanotube [specific surface area: 280 $m^2$/g, "NC7000" trade name manufactured by Nanocyl SA.]

Conductive carbon filler not included in second conductive carbon filler (A2)

A2-4: Carbon nanotube [specific surface area: 500 $m^2$/g, "NC2100" trade name manufactured by Nanocyl SA.]
A2-5: Carbon nanofiber [specific surface area: 13 $m^2$/g, "VGCF-H" trade name manufactured by SHOWA DENKO K.K.]

Incidentally, the specific surface area of each conductive carbon filler is a value measured as a BET specific surface area in conformity with "JIS Z8830: 2013 Method for measuring specific surface area of powder (solid) by gas adsorption":

Resin (polyolefin resin)
Polypropylene resin ["SunAllomer PC684S" trade name manufactured by SunAllomer Ltd.]
Dispersant
["UMEX 1001 (acid-modified polypropylene)" trade name manufactured by SANYO CHEMICAL INDUSTRIES, LTD.].

<Example 1>

A conductive resin composition was obtained by melt-kneading 77 parts of the polyolefin resin, 10 parts of the first conductive carbon filler (A1-2), 8 parts of the second conductive carbon filler (A2-2), and 5 parts of the dispersant using a twin-screw extruder under the conditions of 180°C, 100 rpm, and retention time of 5 minutes. The obtained conductive resin composition was extruded from a T-die and rolled using a cooling roll of which the temperature was adjusted to 50°C to obtain a resin current collector.
The film thickness of the resin current collector was changed by changing the rolling conditions, and the production of the resin current collector and the pinhole test were repeated to take the resin current collector (film thickness: 45 μm in Example 1) which did not have pinholes and was the most thinly formed as the resin current collector of Example 1.

<Examples 2 to 6 and Comparative Examples 1 to 5>

The kinds and blended amounts of the first conductive carbon filler and second conductive carbon filler were changed as presented in Table 1 and conductive resin compositions and resin current collectors were obtained by the same method as in Example 1. The amount of the dispersant blended was set to 5 parts for all, and the amount of the polyolefin resin blended was changed so that the sum of the amounts of the polyolefin resin, the conductive carbon fillers and dispersant blended was 100 parts.
Incidentally, in Comparative Examples 3 and 5, the conductive carbon filler (A2-5) and conductive carbon filler (A2-4) which were conductive carbon fillers not included in the second conductive carbon filler (A2) were used as components corresponding to the second conductive carbon filler, respectively.

<Examples 7 to 9>

Laminate type resin current collectors were fabricated by coextruding the conductive resin composition used in Example 1 and the conductive resin composition used in Comparative Example 2 from a T-die so as to have the layer configuration presented in Table 2 and rolling the coextruded conductive resin compositions using a cooling roll of which the temperature was adjusted to 50°C.

(Measurement and judgment of film thickness)

In each of Examples and Comparative Examples, the film forming property was judged to be favorable in a case in which the thickness of the resin current collector which did not have pinholes and was the most thinly formed was 70 $\mu$m or less and the evaluation result of the film thickness judgment was presented as $\bigcirc$ in Table 1. The film forming property was judged to be inferior in a case in which the thickness of the resin current collector which did not have pinholes and was the most thinly formed exceeded 70 $\mu$m and the evaluation result of the film thickness judgment was presented as $\times$ in each table. In addition, the film thickness presented in Table 2 is not the thickness of one conductive resin layer but the thickness of the entire laminate type resin current collector. The method for measuring the film thickness and the method of the pinhole test are as follows.

<Measurement of film thickness>

The film thickness of the resin current collector was measured at 5 places for each sample using a micrometer [manufactured by Mitutoyo Corporation], and the average value thereof was taken as the film thickness of the sample.

<Pinhole test>

A SUS container containing methanol in a thickness of about 1 to 2 mm was prepared, and a resin current collector cut into 10 cm $\times$ 20 cm was floated thereon, the top surface of the resin current collector was tapped with attention so that the resin current collector did not sink, and it was visually examined whether methanol did not seep out onto the surface of the resin. It is regarded that there is a pinhole when methanol seeps out even at one place.

<Measurement of electric resistance value (penetration resistance value) in thickness direction of resin current collector>

The resin current collector was cut into $\phi$15 mm, and the penetration resistance value of each resin current collector was measured using an electric resistance measuring device [Model IMC-0240 manufactured by Imoto Machinery Co., Ltd.] and a resistance meter [RM3548 manufactured by HIOKI E.E.

CORPORATION] .

The resistance value of the resin current collector was measured in a state in which a load of 2.16 kg was applied to the electric resistance measuring device, and the value in 60 seconds after a load of 2.16 kg was applied was taken as the resistance value of the resin current collector. As presented in the following equation, the value attained by multiplying the resistance value by the area (1.77 cm$^2$) of the contact surface of the jig at the time of resistance measurement was taken as the penetration resistance value ($\Omega \cdot$cm$^2$):

Penetration resistance value ($\Omega \cdot$cm$^2$) = resistance value ($\Omega$) $\times$ 1.77 (cm$^2$)
The penetration resistance value was judged to be favorable in the case of being 30 $\Omega \cdot$cm$^2$ or less and was displayed as $\bigcirc$ in the column for resistance judgment in each table, and the penetration resistance value was displayed as $\times$ in the case of being more than 30 $\Omega \cdot$cm$^2$.

<Measurement of oxidation current amount>

<Fabrication of coin cell for withstanding voltage test>

A gasket, a Li foil cut into $\phi$16 mm, and a separator (formed of polypropylene with a thickness of 25 $\mu$m) cut into $\phi$17 mm were stacked on a negative electrode can of a 2032 type coin cell in this order, and 100 $\mu$L of electrolyte solution was added thereto. The resin current collector cut into $\phi$15 mm was placed thereon, further carbon-coated aluminum [SDX manufactured by SHOWA DENKO K.K.], two spacers (thickness of 500 $\mu$m), a disc spring, and a positive electrode can were stacked thereon in this order, and the 2032 type coin cell was sealed to fabricate a coin cell for evaluation. Incidentally, as the electrolyte solution, a solution was prepared by dissolving 1 M LiPF$_6$ in a mixed solvent (volume ratio of 1 : 1) of ethylene carbonate and dimethyl carbonate.

<Evaluation of withstanding voltage test of resin current collector>

Using a charge and discharge measuring device "HJ1001SM8A" [manufactured by HOKUTO DENKO CORPORATION], the coin cell for evaluation was charged to a voltage of 4.2 V and the generated current was measured in a state in which the voltage was applied as it was for 200 hours. The result of the present test is the sum of the amounts of currents that flowed in a state in which a voltage of 4.2 V was continuously applied.

Incidentally, it is indicated that when the oxidation current amount is small, the capacity loss due to a member when being used as a constituent member of a battery can be decreased and the battery exhibits excellent long term reliability. In Tables 1 and 2, the oxidation current amount was judged to be favorable in the case of being 0.7 mAh/$\phi$15 mm or less and was displayed as $\bigcirc$ in the column for oxidation current amount judgement in each table. The oxidation current amount was displayed as $\Delta$ in the case of being more than 0.7 mAh/$\phi$15 mm and 0.9 mAh/$\phi$15 mm or less. The oxidation current amount was displayed as $\times$ in the case of being more than 0.9 mAh/$\phi$15 mm.

[Evaluation of liquid bleeding]

<Fabrication of lithium ion battery for evaluation>

One obtained by coating the resin current collector obtained in each of Examples and Comparative Examples with a positive electrode active material slurry was used as a positive electrode. Similarly, one obtained by coating a copper foil (FURUKAWA ELECTRIC CO., LTD.) with a negative electrode active material slurry was used as a negative electrode. The positive electrode and negative electrode obtained here were attached to each other with a separator with a frame material interposed therebetween to fabricate a lithium ion battery for evaluation and a lithium ion battery for comparison. The process is described in detail below.

<Fabrication of positive electrode>

[Preparation of polymer compound for coating and solution thereof]

In a four-necked flask equipped with a stirrer, a thermometer, a reflux condenser, a dropping funnel, and a nitrogen gas inlet tube, 70.0 parts of N,N-dimethylformamide (DMF) was placed and the temperature thereof was raised to 75°C. Next, radical polymerization was conducted by continuously dropping a monomer blended liquid containing 20.0 parts of butyl methacrylate, 55.0 parts of acrylic acid, 22.0 parts of methyl methacrylate, 3 parts of sodium allylsulfonate, and 20 parts of DMF and an initiator solution prepared by dissolving 0.4 part of 2,2'-azobis(2,4-dimethylvaleronitrile) and 0.8 part of 2,2'-azobis(2-methylbutyronitrile) in 10.0 parts of DMF into the four-necked flask over 2 hours using a dropping funnel under stirring while blowing nitrogen into the four-necked flask. After completion of dropping, the temperature was raised to 80°C and the reaction was continuously conducted for 5 hours to obtain a copolymer solution having a resin concentration of 50%. The obtained copolymer solution was transferred to a Teflon (registered trademark) vat and dried under reduced pressure at 120°C and 0.01 MPa for 3 hours to distill off DMF, thereby obtaining a polymer compound for coating.

[Preparation of coated positive electrode active material]

In a state in which 100 parts of a positive electrode active material powder (LiNi$_{0.8}$Co$_{0.15}$Al$_{0.05}$O$_2$ powder, volume average particle size of 4 $\mu$m) was placed in a universal mixer High Speed Mixer FS25 [manufactured by Earth Technica Co., Ltd.] and stirred at 720 rpm and room temperature, 11.2 parts of a polymer compound solution for coating obtained by dissolving the polymer compound for coating in isopropanol at a concentration of 1.0% by mass was dropped into the universal mixer over 2 minutes, and the mixture was further stirred for 5 minutes.

Subsequently, in the stirred state, 6.2 parts of acetylene black [DENKA BLACK (registered trademark) manufactured by Denka Company Limited] that was a conductive agent was added to the mixture for 2 minutes in a divided manner, and stirring was continuously performed for 30 minutes. Thereafter, the pressure was reduced to 0.01 MPa while maintaining stirring, and then the temperature was raised to 140°C while maintaining stirring and the degree of reduced pressure, and stirring, the degree of reduced pressure, and the temperature were maintained for 8 hours to distill off the volatile components. The obtained powder was classified using a sieve having an opening of 212 $\mu$m to obtain a coated positive electrode active material.

[Fabrication of positive electrode of lithium ion battery for evaluation]

Using a planetary stirring type mixing and kneading device {AWATORI RENTARO [manufactured by THINKY CORPORATION] }, 42 parts of electrolyte solution for lithium ion battery prepared by dissolving LiPF$_6$ in a mixed solvent (volume ratio of 1 : 1) of ethylene carbonate (EC) and diethyl carbonate (DEC) at a proportion of 1 mol/L and 4.2 parts of carbon fiber [DONACARBO Milled S-243 manufactured by Osaka Gas Chemicals Co., Ltd.: average fiber length of 500 $\mu$m, average fiber diameter of 13 $\mu$m: electric conductivity of 200 mS/cm] were mixed together at 2000 rpm for 7 minutes, then 30 parts of the electrolyte solution and 206 parts of the coated positive electrode active material were added thereto, the mixture was further mixed at 2000 rpm for 1.5 minutes by the AWATORI RENTARO, 20 parts of the electrolyte solution was further added thereto, stirring by the AWATORI RENTARO was performed at 2000 rpm for 1 minute, 2.3 parts of the electrolyte solution was further added thereto, stirring by the AWATORI RENTARO was mixed at 2000 rpm for 1.5 minutes to prepare a positive electrode active material slurry. The resin current collectors of Examples 1 to 9 and Comparative Examples 1 to 5 were coated with the obtained positive electrode active material slurry, respectively, and pressed at a pressure of 5 MPa for about 10 seconds to fabricate positive electrodes (58 mm × 42 mm) for lithium ion batteries according to Examples 1 to 9 and Comparative Examples 1 to 5. Incidentally, with regard to the resin current collectors of Examples 7 and 9, the positive electrode active material slurry was applied to the side of the layer of the conductive resin composition used in Comparative Example 2.

<Fabrication of negative electrode>

[Preparation of polymer compound for coating and solution thereof]

The polymer compound for coating used in the <Fabrication of positive electrode> and a solution thereof were prepared.

[Preparation of coated negative electrode active material]

In a state in which 100 parts of non-graphitizable carbon powder (volume average particle size of 20 $\mu$m) that was a carbon-based material was placed in a universal mixer High Speed Mixer FS25 [manufactured by Earth Technica Co., Ltd.] and stirred at 720 rpm and room temperature, 9.2 parts of a polymer compound solution for coating obtained by dissolving the polymer compound for coating in isopropanol at a concentration of 19.8% by mass was dropped into the universal mixer over 2 minutes, and the mixture was further stirred for 5 minutes.
Subsequently, in the stirred state, 11.3 parts of acetylene black [DENKA BLACK (registered trademark) manufactured by Denka Company Limited] that was a conductive agent was added to the mixture for 2 minutes in a divided manner, and stirring was continuously performed for 30 minutes. Thereafter, the pressure was reduced to 0.01 MPa while maintaining stirring, and then the temperature was raised to 140°C while maintaining stirring and the degree of reduced pressure, and stirring, the degree of reduced pressure, and the temperature were maintained for 8 hours to distill off the volatile components. The obtained powder was classified using a sieve having an opening of 212 $\mu$m to obtain a coated negative electrode active material.

[Fabrication of negative electrode of lithium ion battery for evaluation]

Using a planetary stirring type mixing and kneading device {AWATORI RENTARO [manufactured by THINKY CORPORATION] }, 20 parts of electrolyte solution for lithium ion battery prepared by dissolving LiPF$_6$ in a mixed solvent (volume ratio of 1 : 1) of ethylene carbonate (EC) and diethyl carbonate (DEC) at a proportion of 1 mol/L and 2 parts of carbon fiber [DONACARBO Milled S-243 manufactured by Osaka Gas Chemicals Co., Ltd.: average fiber length of 500 $\mu$m, average fiber diameter of 13 $\mu$m: electric conductivity of 200 mS/cm] were mixed together at 2000 rpm for 7 minutes, then 50 parts of the electrolyte solution and 98 parts of the coated negative electrode active material were added thereto, the mixture was further mixed at 2000 rpm for 1.5 minutes by the AWATORI RENTARO, 25 parts of the electrolyte solution was further added thereto, stirring by the AWATORI RENTARO was performed at 2000 rpm for 1 minute, 50 parts of the electrolyte solution was further added thereto, stirring by the AWATORI RENTARO was mixed at 2000 rpm for 1.5 minutes to prepare a negative electrode active material slurry.
One side of copper foils [manufactured by FURUKAWA ELECTRIC CO., LTD.] were coated with the obtained negative electrode active material slurry, respectively, and the coated copper foils were pressed at a pressure of 5 MPa for about 10 seconds to fabricate negative electrodes (62 mm × 46 mm) for lithium ion batteries.

[Manufacture of separator body]

Flat plate-shaped Celgard 2500 (formed of PP, thickness of 25 $\mu$m) was cut into a 30 mm × 30 mm square and used as the separator body.

[Fabrication of frame-shaped member]

A laminated film formed of low melting point polyethylene (PE) to be a sealing layer was stretched to prepare a stretched film (low melting point PE stretched film) having a thickness of 25 $\mu$m. Thereafter, a film which had a thickness

of 250 μm and was formed of polyethylene naphthalate (PEN manufactured by TEIJIN LIMITED) to be a heat resistant annular support member and an adhesive polyolefin-based resin film (ADMER VE300 manufactured by Mitsui Chemicals, Inc., thickness of 50 μm) were bonded to each other by a heating roll or a laminating machine to prepare a laminated body. Thereafter, by cutting the laminated body into a 66 mm × 50 mm rectangle and further punching out a ϕ23 mm region at the center, a rectangular laminated body (frame-shaped member) was obtained in which four sides had an annular shape and the heat resistant annular support member (PEN layer) formed of PEN and the sealing layer (low melting point PE layer) formed of a low melting point PE stretched film were laminated.

[Joining of separator body and frame-shaped member]

A separator for lithium ion battery in which the frame-shaped member was annularly disposed along the outer periphery of the separator body was obtained by attaching the frame-shaped member to both surfaces of the separator body and boding these to each other using an impulse sealer so that the center of gravity based on the outer dimensions of the frame-shaped member and the center of gravity based on the outer dimensions of the separator body overlapped each other and each of the PEN layers of the respective frame-shaped members came into contact with the separator body.

Incidentally, the sealing layer (low melting point PE layer) on the side in contact with the positive electrode current collector is defined as the first sealing layer and the sealing layer (low melting point PE layer) on the side in contact with the negative electrode current collector is defined as the second sealing layer.

The PEN layers are in contact with each other at a portion having a width of 0.5 mm from the outer periphery but face each other at a portion having a width of 1.5 mm on the inner side thereof with the separator body interposed therebetween.

[Fabrication of lithium ion battery for evaluation]

The separator with a frame material, which had been moistened with the electrolyte solution in advance was placed on the negative electrode (the surface to be placed on the negative electrode at this time is the surface opposite to the surface on which the separator is attached to the frame material), and one in which this negative electrode and the separator with a frame material were integrated with each other was superimposed on the positive electrodes for lithium ion battery according to Examples 1 to 9 and Comparative Examples 1 to 5. After superimposition, three sides were sealed with a heating sealer in the order of one long side, one short side, and the other long side. For the last one side, the inside of the cell was evacuated using TOSPACK (manufactured by TOSEI) and the other short side was sealed. The cells obtained at this time were placed in an aluminum laminated cell (positive electrode: carbon-coated aluminum, negative electrode: copper foil) to fabricate lithium ion batteries for evaluation 1 to 9 and lithium ion batteries for comparison 1 to 5.

<Charge and discharge test of lithium ion battery>

A charge and discharge test of the lithium ion batteries for evaluation 1 to 9 and lithium ion batteries for comparison 1 to 5 was performed at 45°C using a charge and discharge measuring device "HJ-SD8" [manufactured by HOKUTO DENKO CORPORATION] by the following method.

The battery was charged to 4.2 V by a constant current constant voltage system (0.1 C), then paused for 10 minutes, and then discharged to 2.6 V by a constant current system (0.1 C).

<Evaluation on presence or absence of liquid bleeding>

With regard to the lithium ion batteries for evaluation 1 to 9 and lithium ion batteries for comparison 1 to 5, it was visually examined whether liquid bleeding such as droplets that had penetrated from the inside of the cell had occurred on the outer side of the resin current collector of the cell after being subjected to the charge and discharge test. The liquid bleeding was judged to be absent (displayed as ○ in Table 1 and Table 2) when there was no droplet derived from the electrolyte solution, and the liquid bleeding was judged to be present (displayed as × in Table 1 and Table 2) when droplets seeped out.

[Table 1]

| | | First conductive carbon filler (A1) | | | | Second conductive carbon filler (A2) | | | Evaluation | | | | | | |
|---|---|---|---|---|---|---|---|---|---|---|---|---|---|---|---|
| | Kind | Specific surface area (m²/g) | Mass proportion (% by mass)* | Total surface area (m²/g) | Kind | Specific surface area (m²/g) | Mass pro-portion (% by mass)* | Film thick-ness (μm) | Film thick-ness: judge-ment | Penetration resistance value (Ω·cm²) | Penetration resistance: judgement | Oxidation current amount (mAh/φ15) | Oxidation current amount: judgement | Liquid bleeding: judgement |
| Example 1 | A1-2 | 32 | 10 | 3.2 | A2-2 | 213 | 8 | 45 | ○ | 7.0 | ○ | 0.28 | ○ | ○ |
| Example 2 | A1-4 | 69 | 10 | 6.9 | A2-3 | 280 | 8 | 50 | ○ | 4.5 | ○ | 0.30 | ○ | ○ |
| Example 3 | A1-1 | 1.8 | 30 | 0.5 | A2-2 | 213 | 12 | 70 | ○ | 15.0 | ○ | 0.31 | ○ | ○ |
| Example 4 | A1-3 | 39 | 10 | 3.9 | A2-3 | 280 | 10 | 60 | ○ | 12.0 | ○ | 0.25 | ○ | ○ |
| Example 5 | A1-4 | 69 | 12 | 8.3 | A2-1 | 58 | 15 | 70 | ○ | 1.0 | ○ | 0.60 | ○ | ○ |
| Example 6 | A1-4 | 69 | 13 | 9.0 | A2-2 | 213 | 5 | 45 | ○ | 10.0 | ○ | 0.75 | △ | ○ |
| Comparative Example 1 | A1-4 | 69 | 20 | 13.8 | A2-2 | 213 | 5 | 70 | ○ | 1.0 | ○ | 0.98 | × | × |
| Comparative Example 2 | A1-4 | 69 | 25 | 17.3 | - | - | - | 75 | × | 6.0 | ○ | 1.45 | × | × |
| Comparative Example 3 | A1-2 | 32 | 10 | 3.2 | A2-5 | 13 | 15 | 60 | ○ | 200 | × | 0.23 | ○ | ○ |
| Comparative Example 4 | - | - | - | 0.0 | A2-2 | 213 | 8 | 60 | ○ | 35.0 | × | 0.30 | ○ | ○ |
| Comparative Example 5 | - | - | - | 0.0 | A2-4 | 500 | 10 | 60 | ○ | 19.0 | ○ | 1.22 | × | ○ |

*The mass proportion is the mass proportion of filler contained in 1 g of the resin current collector.

[Table 2]

| | Laminate type resin current collector | | | | | Evaluation | | | | | | |
|---|---|---|---|---|---|---|---|---|---|---|---|---|
| | First layer | Second layer | Third layer | Fourth layer | Fifth layer | Film thickness ($\mu$m) | Film thickness: judgement | Penetration resistance value ($\Omega\cdot$cm$^2$) | Penetration resistance: judgement | Oxidation current amount (mAh/$\phi$15) | Oxidation current amount: judgement | Liquid bleeding: judgement |
| Example 7 | Example 1 | Comparative Example 2 | - | - | - | 55 | ○ | 6.5 | ○ | 0.40 | ○ | ○ |
| Example 8 | Example 1 | Comparative Example 2 | Example 1 | Comparative Example 2 | Example 1 | 50 | ○ | 6.2 | ○ | 0.38 | ○ | ○ |
| Example 9 | Example 1 | Comparative Example 2 | Comparative Example 2 | - | - | 60 | ○ | 6.8 | ○ | 0.45 | ○ | ○ |

In Examples 1 to 6, both the first conductive carbon filler (A1) and the second conductive carbon filler (A2) are contained and the total surface area of the first conductive carbon filler (A1) contained in 1 g of the resin current collector is included in the predetermined range, thus the penetration resistance value and oxidation current amount of the resin current collector are in favorable ranges, liquid bleeding can be prevented, and a resin current collector exhibiting excellent film forming property is formed. In addition, the film forming property is also excellent. In addition, the laminate type resin current collectors of Examples 7 to 9 include the resin current collector of Example 1 and thus exhibit favorable properties.

In Comparative Examples 1 and 2, the oxidation current amount is large since the total surface area of the first conductive carbon filler (A1) contained in 1 g of the resin current collector is larger than 9.0 $m^2$.

In Comparative Example 2, the film forming property is inferior since only the first conductive carbon filler (A1) is used.

In Comparative Example 3, the penetration resistance value is high since the conductive carbon filler (A2-5) having a specific surface area of 13 $m^2/g$ is used as a component corresponding to the second conductive carbon filler.

In Comparative Example 4, the penetration resistance value is high since the first conductive carbon filler (A1) is not used.

In Comparative Example 5, the oxidation current amount is large since the conductive carbon filler (A2-4) having a specific surface area of 500 $m^2/g$ is used as a component corresponding to the second conductive carbon filler.

Industrial Applicability

The resin current collector of the present invention is particularly useful as a current collector for lithium ion batteries used for mobile phones, personal computers, hybrid vehicles, and electric vehicles.

This application is based on Japanese Patent Application No. 2018-112869 filed on June 13, 2018, the entire contents of which are incorporated herein by reference.

**Claims**

1. A resin current collector comprising a polyolefin resin and two kinds of conductive carbon fillers, a first conductive carbon filler (A1) and a second conductive carbon filler (A2), wherein
the first conductive carbon filler (A1) is graphite or carbon black, the second conductive carbon filler (A2) is a carbon nanotube or a carbon nanofiber having a specific surface area of 35 to 300 $m^2/g$,
a total surface area of the first conductive carbon filler (A1) contained in 1 g of the resin current collector is 0.5 to 9.0 $m^2$, and
a mass proportion of the first conductive carbon filler (A1) is 30% by mass or less with respect to a mass of the resin current collector.

2. The resin current collector according to claim 1, wherein a mass proportion of the second conductive carbon filler (A2) is 5 to 20% by mass with respect to a mass of the resin current collector.

3. The resin current collector according to claim 1 or 2, which is a resin current collector for a positive electrode of a lithium ion battery.

4. A laminate type resin current collector comprising two or more conductive resin layers, wherein at least one layer among the conductive resin layers is the resin current collector set forth in claim 1 or 2.

5. The laminate type resin current collector according to claim 4, which is a resin current collector for a bipolar electrode of a lithium ion battery.

6. A lithium ion battery comprising the resin current collector set forth in any one of claims 1 to 3 or the laminate type resin current collector set forth in claim 4 or 5.

## INTERNATIONAL SEARCH REPORT

International application No.

PCT/JP2019/021614

### A.  CLASSIFICATION OF SUBJECT MATTER
Int.Cl. H01M4/66(2006.01)i

According to International Patent Classification (IPC) or to both national classification and IPC

### B.  FIELDS SEARCHED

Minimum documentation searched (classification system followed by classification symbols)
Int.Cl. H01M4/64-4/84, H01M10/05-10/0587, H01M10/36-10/39

Documentation searched other than minimum documentation to the extent that such documents are included in the fields searched
Published examined utility model applications of Japan        1922-1996
Published unexamined utility model applications of Japan      1971-2019
Registered utility model specifications of Japan              1996-2019
Published registered utility model applications of Japan      1994-2019

Electronic data base consulted during the international search (name of data base and, where practicable, search terms used)

### C.  DOCUMENTS CONSIDERED TO BE RELEVANT

| Category* | Citation of document, with indication, where appropriate, of the relevant passages | Relevant to claim No. |
|---|---|---|
| A | JP 2017-228344 A (TOYO INK SC HOLDINGS CO., LTD.) 28 December 2017 (Family: none) | 1-6 |
| A | JP 2005-272591 A (MITSUBISHI PLASTICS, INC.) 06 October 2005 & US 2007/0218368 A1 & EP 1762587 A1 | 1-6 |
| A | JP 2011-054492 A (NISSAN MOTOR CO., LTD.) 17 March 2011 (Family: none) | 1-6 |

☒   Further documents are listed in the continuation of Box C.          ☐   See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 19 August 2019 (19.08.2019) | 27 August 2019 (27.08.2019) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2019/021614

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2015-180714 A (JAPAN POLYETHYLENE CORP.) 15 October 2015 & US 2016/0284435 A1 | 1-6 |
| A | JP 63-224103 A (SUMITOMO BAKELITE CO., LTD.) 19 September 1988 (Family: none) | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015005116 A

- JP 2018112869 A